# EUROPÄISCHE PATENTSCHRIFT

(11) **EP 1 052 151 B1**
(45) Veröffentlichungstag und Bekanntmachung des Hinweises auf die Patenterteilung: **08.10.2003**
(21) Anmeldenummer: 00107958.1
(22) Anmeldetag: 17.04.2000
(51) Int. Cl.: B60R 19/38

(54) **Kraftfahrzeugstossfänger**
Bumper for motor vehicle
Pare-chocs de véhicules automobiles

(30) Priorität: 08.05.1999 DE 19921480
(43) Veröffentlichungstag der Anmeldung: 15.11.2000
(73) Patentinhaber: Volkswagen Aktiengesellschaft, 38436 Wolfsburg (DE)
(72) Erfinder: Zogalla, Gerhard, 38471 Rühen (DE); Sinnhuber, Ruprecht, Dipl.-Ing., 38518 Gifhorn (DE)

(56) Entgegenhaltungen:
- DE-A- 2 100 817
- GB-A- 2 336 811
- US-A- 3 992 047
- US-A- 4 264 093
- US-A- 4 518 183
- US-A- 5 810 427

## Beschreibung

Die Erfindung betrifft ein Kraftfahrzeug mit einem Stoßfänger, insbesondere ein Personenkraftwagen.

In den vergangenen Jahren wurde von der Anmelderin und anderen Kraftfahrzeugherstellern eine Vielzahl von Aufprallversuchen durchgeführt, bei denen nicht nur die Sicherheit der Fahrzeuginsassen im Mittelpunkt stand, sondern auch diejenige von Fußgängern bei Unfällen mit Kraftfahrzeugen. Dabei wurden insbesondere Unfälle untersucht, bei denen ein Fußgänger frontal von einem Personenkraftwagen erfaßt wird, weil diese Art von Unfällen besonders im innerstädtischen Bereich verhältnismäßig häufig ist und für die betroffenen Fußgänger nicht selten tödlich oder mit sehr schweren Verletzungen endet.

Wenn ein Fußgänger frontal von einem Personenkraftwagen erfaßt wird, kommt er gewöhnlich zuerst in Beinhöhe mit dem Stoßfänger des Fahrzeugs in Berührung, weil dieser den vordersten Teil des Fahrzeugs bildet. Wenn dieser Stoßfänger verhältnismäßig schmal ausgebildet ist, d.h. nur eine geringe Höhe aufweist, wie zum Beispiel von älteren Fahrzeugen her bekannt, und/oder sich in Höhe des Knies des Fußgängers befindet, wie es beispielsweise bei Geländewagen aufgrund der größeren Bodenfreiheit zumeist der Fall ist, kommt es beim Aufprall gewöhnlich sofort zu einem Einknicken der Beine des Fußgängers im Kniegelenk. Dadurch können die Füße und Unterschenkel des Fußgängers unter die Frontpartie des Fahrzeugs geraten, was insbesondere bei geringeren Fahrzeuggeschwindigkeiten ein anschließendes Überrollen des Fußgängers begünstigt.

Derartige Untersuchungsergebnisse haben mittlerweile Eingang in einen Entwurf einer geplanten Sicherheitsvorschrift gefunden, insofern als für eine Bauartzulassung eines Fahrzeugs der Test für den Fußgängerschutz nach EEVC WG 10, III/5021/96 EN für den Beinimpactor bestanden werden muß. Dieser Impactor muß beim Test bestimmte Kriterien erfüllen. Dazu ist es vorteilhaft, daß er möglichst tief angestoßen wird.

Diese Anforderung kollidiert jedoch insbesondere bei geländetauglichen Fahrzeugen mit der gewünschten Bodenfreiheit im Bereich des vorderen Stoßfängers. Um bei geländetauglichen Fahrzeugen an einem Übergang zwischen einer horizontalen und einer steil ansteigenden Geländeoberfläche oder an einem Übergang zwischen einer steil abfallenden und einer horizontalen Geländeoberfläche ein Aufsetzen des Fahrzeugs im Bereich des vorderen Stoßfängers zu verhindern, ist ein möglichst großer Überhangwinkel erforderlich, wobei dies der Winkel zwischen einer ebenen Fahrbahnoberfläche und einer Ebene ist, die sich von den Auflagepunkten der Vorderräder als Tangentialebene zu den am tiefsten liegenden Punkten des Fahrzeugs unterhalb des Stoßfängers erstreckt, wobei sich diese am tiefsten liegenden Punkte gewöhnlich an der Unterkante einer vorderen Stirnfläche des Stoßfängers oder eines darunter angeordneten Frontspoilers befinden. Ein großer Überhangwinkel wird nur dann erreicht, wenn entweder in Fahrtrichtung der Abstand zwischen der vorderen Stirnfläche des Stoßfängers und der Achsmitte der Vorderräder verhältnismäßig klein gewählt wird, was nur bei kurzen Geländewagen möglich ist, weil ein größerer Achsabstand wiederum im Gelände ein Aufsetzen in der Wagenmitte begünstigen würde, oder wenn der vertikale Abstand zwischen der Unterkante der vorderen Stirnfläche des Stoßfängers oder Frontspoilers und der Fahrbahnoberfläche groß ist, was im Gegensatz zu dem oben erwähnten Auslegungsziel für den geplanten Beinimpactor steht.

Personenkraftwagen neuerer Zulassung weisen häufig eine sogenannte "Soft-nose" auf, d.h. ihre Frontpartie wird von einem integrierten Bauteil gebildet, das einen Stoßfänger und einen darunter angeordneten Frontspoiler umfaßt, wobei sich die vordere Stirnfläche des Spoilers häufig in Verlängerung der vertikalen vorderen Stirnfläche des Stoßfängers nach unten erstreckt, um bei einem Aufprall auf ein Bein eines Fußgängers die Aufprallfläche zu vergrößern und ein Abknicken desselben zu verhindern. Die Unterkante des Spoilers weist dort gewöhnlich einen Abstand von 200 mm oder weniger von der Fahrbahnoberfläche auf, wodurch mit verhältnismäßig hoher Sicherheit verhindert wird, daß die Beine eines vom Pkw erfaßten Fußgängers und damit dieser selbst unter den Wagen gelangen können. Bei einem derartigen Pkw führt jedoch schon das Befahren von unbefestigten Wald- und Feldwegen mit Buckeln oder Bodenwellen zu erheblichen Schwierigkeiten.

Um vorstehenden Problemen zu begegnen, sind die unterschiedlichsten technischen Lösungen offenbart worden. Aus der US 3,992,047 ist z. B. ein Kraftfahrzeug mit einem Stoßfänger gemäβ der Oberbegriff des Anspruchs 1 bekannt, der seinerseits hydraulisch angetrieben, aufgrund einer Kipp- oder Schwenkbewegung in der Höhe verstellbar ist. Mit der US 4,264,093 wird dagegen ein vertikal verstellbarer Stoßfänger offenbart, der seinerseits ebenfalls hydraulisch betätigt wird. Femer sind zur Vergrößerung des Deformationsbereiches der Kraftfahrzeugkarosserie im Falle eines Frontal- und/oder Heckcrashes und demgemäß zur verbesserten Energieabsorption Lösungen bekannt, die im Wesentlichen vorschlagen, den Stoßfänger horizontal zu verstellen. Danach wird gem. der US 4,518,183 vorgeschlagen, die Stoßfänger in Abhängigkeit von der aktuellen Geschwindigkeit des Kraftfahrzeugs oder einem durch einen Radar-Detector erkannten Hindemiss horizontal zu verstellen, wobei hier die Verstellung elektromotorisch erfolgt. Weiterhin ist es bekannt, horizontal verstellbare Stoßfänger mit aufblasbaren Luftkissen zu kombinieren (US 4,518,183; US 5,810,427). Schließlich ist es bekannt, den Front- und Heckbereich des Kraftfahrzeugs balgförmig, d. h., als aufblasbare Kammern auszugestalten (DE 2 100 817 A1).

Ausgehend hiervon liegt der Erfindung die Aufgabe zugrunde, weitere vorteilhafte Alternativen der Ausgestaltung eines Kraftfahrzeug mit einem Stoßfänger der eingangs genannten Art anzugeben, mit welchen die Kriterien des geplanten Beinimpactors erfüllt werden können, ohne die Geländegängigkeit des Fahrzeugs wesentlich zu beeinträchtigen.

Erfindungsgemäß wird die Aufgabe in Verbindung mit den Merkmalen im Oberbegriff des Anspruchs 1 dadurch gelöst, daß dem Kraftfahrzeug respektive der Antriebsvorrichtung zur Veränderung der Geometrie des Stoßfängers ein oder mehrere Neigungs- und/oder Schwingungssensoren zugeordnet sind und die Antriebsvorrichtung manuell oder automatisch betätigt wird, wenn die Summe der Neigungswinkel und/oder der Schwingungsamplituden des Kraftfahrzeugs über einen vorbestimmten Zeitraum einen vorgegebenen Wert übersteigt bzw. unter den vorgegebenen Wert sinkt.

Durch diese Maßnahmen wird in Abhängigkeit von einer jeweiligen Fahrt- oder Pre-Crash-Situation zweckgerichtet entweder ein besserer Fußgängerschutz oder eine bessere Geländegängigkeit gewährleistet.

Die erfindungsgemäßen Kraftfahrzeug mit einem Stoßfänger und/oder Spoiler, wie beispielsweise vordere Stoßfänger und/oder Spoiler, können sowohl bei sogenannten Geländewagen zur Verbesserung des Fußgängerschutzes als auch bei Pkw-Kombis oder Limousinen zur Verbesserung der Geländegängigkeit vorgesehen werden, wobei sie daneben auch noch die Designfreiheit bei der Gestaltung der Frontpartie der damit ausgestatteten Fahrzeuge vergrößern.

Die Bewegung des Stoßfänger- und/oder Spoilerteils erfolgt vorzugsweise zwischen zwei Endstellungen, einer sogenannten "ausgefahrenen" Endstellung, in der durch eine weit nach unten reichende, vertikale oder sehr steil geneigte vordere Stirnfläche des Stoßfängers und/oder Spoilers die Kriterien des geplanten Beinimpactors erfüllt werden können, und einer sogenannten "eingefahrenen" Endstellung, in der die Geländegängigkeit durch Vergrößerung des Überhangwinkels β bzw. des Abstands zwischen dem Stoßfänger oder Spoiler und der Fahrbahnebene verbessert wird. Dabei ist der Überhangwinkel β in der ersten Endstellung kleiner als 20 Grad und in der zweiten Endstellung größer als 25 Grad gewählt bzw. der Abstand beträgt in einer ersten Endstellung zwischen 180 und 300 mm und in der zweiten Endstellung mehr als 300 mm. Wie die Erfindung weiter vorsieht, wird bei der Verlagerung des beweglichen Stoßfängerund/Oder Spoilerteils ein Neigungswinkel einer vorderen Stirnfläche des beweglichen Stoßfänger- und/oder Spoilerteils gegenüber der Fahrbahnebene vergrößert bzw. verkleinert. Hierbei liegt der Neigungswinkel in der ersten Endstellung zwischen 70 und 90 Grad. In der zweiten Endstellung ist er kleiner als 60 Grad gewählt.
Die Bewegung des Stoßfänger- und/oder Spoilerteils beim Ein- bzw. Ausfahren ist bevorzugt eine Horizontalbewegung, d.h. eine Bewegung parallel zu einer Fahrbahnebene, wobei beim Einfahren ein horizontaler Abstand zwischen der Achsmitte und der vorderen Stirnfläche des beweglichen unteren Stoßfänger- und/oder Spoilerteils verkleinert wird, um dadurch den Überhangwinkel β zu vergrößem, während beim Ausfahren die vordere Stirnfläche des beweglichen Stoßfänger- und/oder Spoilerteils über eine vordere Stimfläche eines darüber angeordneten Stoßfänger- und/oder Spoilerteils hinaus oder im wesentlichen bis zum Fluchten mit dieser in Fahrtrichtung nach vorne bewegt wird, um die Aufprallfläche tiefer zu legen bzw. zu vergrößem.

Alternativ dazu ist es jedoch gleichfalls möglich, den Überhangwinkel β dadurch zu vergrößem, daß der gesamte Stoßfänger und/oder Spoiler oder ein unterer Teil des Stoßfängers und/oder Spoilers vertikal, d.h. senkrecht zur Fahrbahnebene, nach oben bewegt wird, um so die Geländegängigkeit zu verbessern, während durch eine Abwärtsbewegung des Stoßfängers und/oder Spoilers oder von deren unterem Teil der Schwerpunkt des Aufpralls des Stoßfängers und/oder Spoilers auf ein Bein eines Fußgängers nach unten verschoben werden kann, um dadurch die Kriterien des geplanten Beinimpactors erfüllen zu können.

Zur Verkleinerung bzw. Vergrößerung des Überhangwinkels β sind weiter selbstverständlich auch Kombinationen dieser beiden Translationsbewegungen möglich, d.h. Verschiebungen des Stoßfänger- und/oder Spoilerteils nach vome und unten bzw. nach hinten und oben, oder der bewegliche Stoßfänger- und/oder Spoilerteil kann um eine quer zur Fahrtrichtung verlaufende Achse verschwenkt werden, um den Abstand zwischen seiner Unterkante und der Fahrbahnebene zu vergrößern bzw. zu verkleinern und dabei gleichzeitig die Neigung seiner vorderen Stirnfläche zu verändern. Eine derartige Beweglichkeit ist insbesondere bei Spoilern sinnvoll, da sie sich gleichzeitig nutzen läßt, um zum Beispiel den Luftanströmwinkel bei höheren Fahrzeuggeschwindigkeiten zu verändern.

Die Antriebsvorrichtung wird vorzugsweise von einem Elektromotor oder einem Hydraulikzylinder gebildet, kann jedoch grundsätzlich auch von einem Pneumatikzylinder gebildet werden oder über eine Kupplung mit dem Antrieb des Kraftfahrzeugs verbindbar sein, um einen Teil von dessen Antriebsenergie zur Verlagerung des Stoßfängerund/Oder Spoilerteils zu benutzen. Ebenso ist es denkbar, dass die Antriebsvorrichtung pyrotechnisch arbeitet.
Im normalen Fahrbetrieb eines mit dem beweglichen Stoßfänger- und/oder Spoilerteils ausgestatteten Kraftfahrzeugs erfolgt die Betätigung der Antriebsvorrichtung zweckmäßig über einen Bedienungsschalter im Wageninneren, der in Abhängigkeit von den durch die Neigungs- und/oder Schwingungssensoren ermittelten Werten und demgemäß von den jeweiligen Fahrtbedingungen vom Fahrer nach Bedarf manuell betätigt werden kann, zum Beispiel um den beweglichen Stoßfänger- und/oder Spoilerteil vor einer Geländefahrt einzuziehen oder im Stadtverkehr auszufahren. Alternativ oder zusätzlich kann, wie bereits oben dargetan, die Betätigung jedoch auch automatisch in Abhängigkeit von den jeweiligen Fahrtbedingungen erfolgen. In jedem Fall ist es sinnvoll, dem Fahrer durch eine Anzeige im Wageninneren anzuzeigen, welche Stellung der Stoßfänger- und/oder Spoilerteil einnimmt, und auch bei automatischer Aktivierung der Antriebsvorrichtung einen Bedienungsschalter vorzusehen, durch dessen Betätigung die Automatik übersteuert werden kann.

Im folgenden wird die Erfindung anhand von drei in der Zeichnung in schematischer Weise dargestellten Ausführungsbeispielen näher erläutert.
Die Figuren 1a und 1b sind Seitenansichten des Vorderteils eines mit einem erfindungsgemäßen Stoßfänger ausgestatteten Personenkraftwagens, welche den Stoßfänger in eingefahrenem bzw. ausgefahrenem Zustand zeigen;
Fig. 1c ist eine Vorderseitenansicht des in den Figuren 1a und 1b dargestellten Personenkraftwagens;
die Figuren 2a und 2b sind vergrößerte Seitenansichten der Frontpartie eines mit einem anderen erfindungsgemäßen Stoßfänger ausgestatteten Personenkraftwagens, welche einen unter dem Stoßfänger angeordneten beweglichen Spoiler in eingefahrenem bzw. ausgefahrenem Zustand zeigen;
die Figuren 3a und 3b sind vergrößerte Seitenansichten der Frontpartie eines mit einem anderen erfindungsgemäßen Stoßfänger ausgestatteten Personenkraftwagens, welche einen anderen beweglichen Spoiler in eingefahrenem bzw. ausgefahrenem Zustand zeigen.

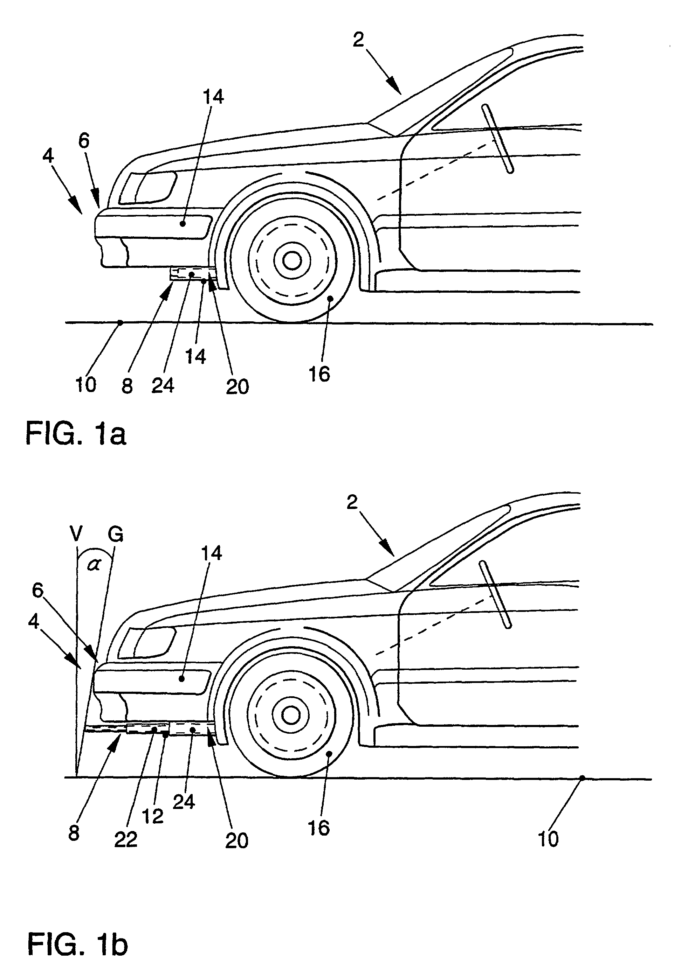

Der in den Figuren 1a und 1b dargestellte Personenkraftwagen 2 weist einen vorderen Stoßfänger 4 auf, der aus zwei Teilen besteht, einem oberen Teil 6, der starr an der Karosserie des Pkw 2 befestigt ist, und einem unteren Teil 8, der sich parallel zu einer ebenen Fahrbahnoberfläche 10 in Bezug zum oberen Teil 6 und zur Karosserie bewegen läßt.

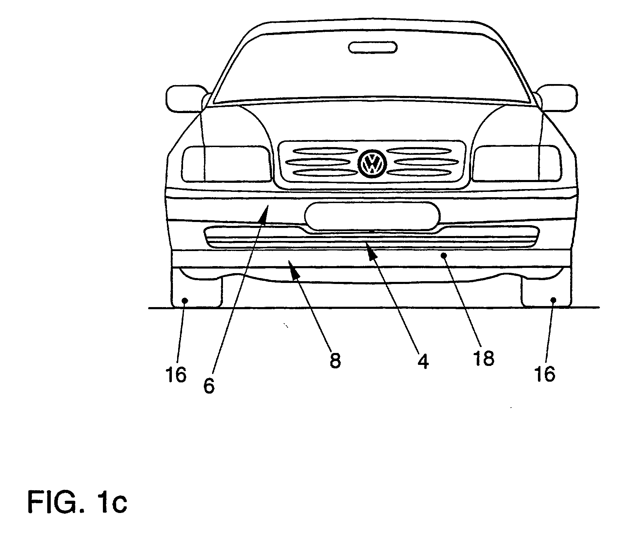

Der obere Stoßfängerteil 6 ist wie übliche Pkw-Stoßfänger aufgebaut und starr an der Karosserie des Pkw befestigt und wird daher nicht näher beschrieben. Der untere Stoßfängerteil 8 weist in Draufsicht einen U-förmigen Umriss auf, dessen beide parallele Schenkel 12 an den Seiten des Pkw 2 unterhalb der nach hinten umgebogenen Seitenteile 14 des oberen Stoßfängerteils 6 und in Fahrtrichtung vor den Vorderrädern 16 angeordnet sind, während sein Joch 18 (Fig. 1c) die vorderen Enden der beiden Schenkel 12 verbindet und sich unterhalb des oberen Stoßfängerteils 6 quer zur Fahrtrichtung über die gesamte Breite des Pkw 2 erstreckt.

Die beiden Schenkel 12 des unteren Stoßfängerteils 8 sind teleskopierbar ausgebildet und beherbergen im Inneren jeweils einen Hydraulik-Teleskopzylinder 20, deren parallele Kolbenstangen 22 nach vorne weisen und an ihrem vorderen Ende mit dem Joch 18 verbunden sind. Die Zylinderrohre 24 der beiden Teleskopzylinder 20 stützen sich an ihrem hinteren Ende gegen ein karosseriefestes Widerlager ab, so daß das Joch 18 durch Ausfahren der Kolbenstangen 22 nach vome in eine ausgefahrene vordere Endstellung (Fig. 1b) bzw. durch Einziehen der Kolbenstangen 22 nach hinten in eine eingefahrene hintere Endstellung (Fig. 1a) bewegt werden kann.

In der vorderen Endstellung steht das Joch 18 mit seiner vorderen Stimseite leicht nach vome über die vordere Stirnseite des oberen Stoßfängerteils 6 über, so daß ein im Weg des Pkw befindliches Hindernis, wie beispielsweise ein Fußgänger, zuerst von der vertikalen vorderen Stirnfläche des unteren Stoßfängerteils 8 getroffen wird. Die Höhe, in welcher der untere Stoßfängerteil 8 am Pkw angebracht ist, ist so gewählt, daß sich die Mitte seiner vorderen Stirnfläche zwischen 250 und 300 mm über der Fahrbahnoberfläche 10 befindet, und somit etwa in Höhe des Schwerpunkts des Unterschenkels eines erwachsenen Fußgängers. Der Überstand, den die vordere Stirnfläche des ausgefahrenen unteren Stoßfängerteils 8 gegenüber der vorderen Stirnfläche des darüber angeordneten oberen Stoßfängerteils 6 aufweist, beträgt nur wenige Zentimeter, so daß eine in Seitenansicht an die Stimenden der beiden Teile des Stoßfängers angelegte Gerade G mit der Vertikalen V einen Winkel α von weniger als 15° einschließt.

Weiter ist in einem Hydraulikkreislauf (nicht dargestellt) der beiden Teleskopzylinder 20 ein Überdruckventil vorgesehen, das sich in einen Tank öffnet, wenn bei einem Aufprall des Pkw 2 auf ein Hindernis, z.B. einen Fußgänger, eine von diesem entgegen der Fahrtrichtung auf das Joch 18 des unteren Stoßfängerteils 8 ausgeübte Kraft einen vorbestimmten Wert, zum Beispiel 10 oder 20 kp übersteigt. Dadurch wird der untere Stoßfängerteil 8 beim Überschreiten dieser Kraft nach hinten gedrückt, wobei zum einen ein kleiner Teil der Aufprallenergie ohne Verformung des Stoßfängers 4 absorbiert wird, und zum anderen die Anlagefläche der vorderen Stirnfläche des gesamten Stoßfängers 4 an einem vertikalen Hindernis, wie beispielsweise den Beinen des Fußgängers, vergrößert wird, was die Flächenpressungen verringert.

Die Beaufschlagung der Hydraulikzylinder 20 mit Hydraulikfluid zum Ein- oder Ausfahren des unteren Stoßfängerteils 8 erfolgt über einen Hydraulikmotor, der durch einen Bedienungsschalter auf der Instrumententafel des Kraftfahrzeugs (nicht dargestellt) in Betrieb genommen wird. Vorzugsweise befindet sich der untere Stoßfängerteil 8 im Normalzustand in seiner ausgefahrenen Endstellung und wird zum Beispiel vor oder während einer Geländefahrt durch Betätigung des Bedienungsschalters eingefahren, wenn die Summe der Neigungswinkel und/oder Schwingungsamplituden des Kraftfahrzeugs über einen vorbestimmten Zeitraum einen vorgegebenen Wert übersteigt.

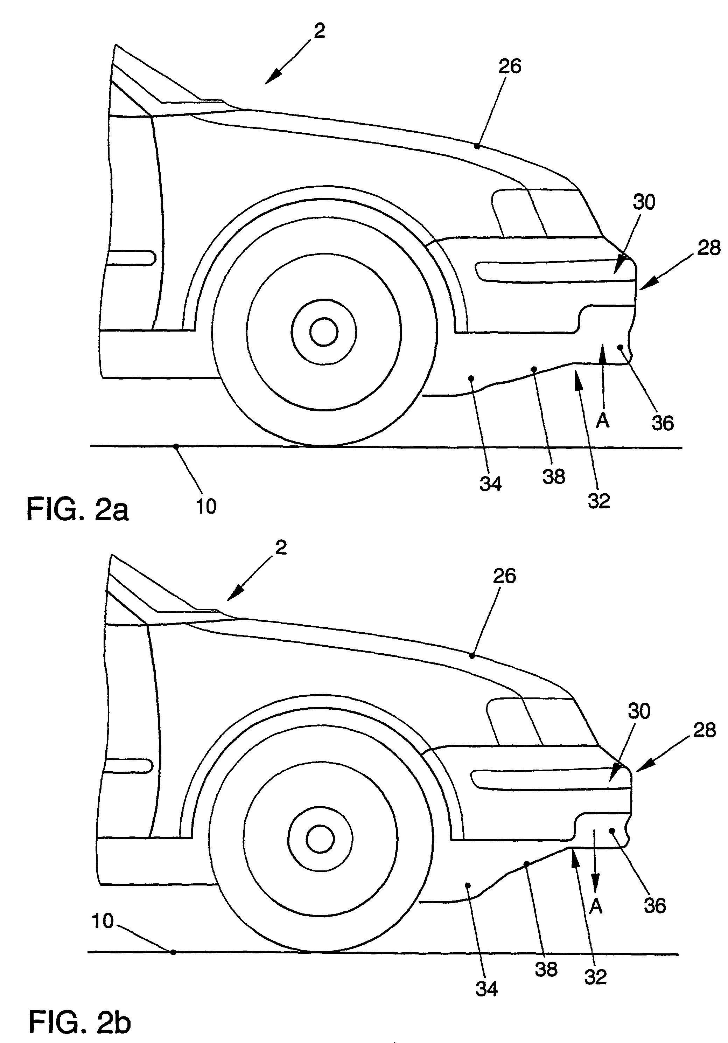

Bei einem in den Figuren 2a und 2b dargestellten Pkw 2 mit beispielsweise Vorderradund Allradantrieb wird die gesamte Frontpartie unterhalb des vorderen Randes der Motorhaube 26 von einer sogenannten Soft-nose 28 gebildet, die im wesentlichen aus einen starr mit der Karosserie verbundenen verformbaren vorderen Stoßfänger 30 und einem unterhalb des Stoßfängers 30 angeordneten, in den Stoßfänger 30 integrierten Frontspoiler 32 besteht. Der Frontspoiler 32 besteht im wesentlichen aus einem starr mit der Karosserie verbundenen hinteren Teil 34, einem vorderen Teil 36, der mittels eines Elektromotors und eines Zahnstangengetriebes (nicht dargestellt) in Bezug zum Stoßfänger 30 zwischen einer in Fig. 2a dargestellten ausgefahrenen unteren Endstellung und einer in Fig. 2b dargestellten eingefahrenen oberen Endstellung in Richtung der Pfeile A vertikal auf und ab bewegt werden kann, sowie einem flexiblen Mittelteil 38 zum Überbrücken des Abstands zwischen dem vorderen und dem hinteren Teil 36, 34.

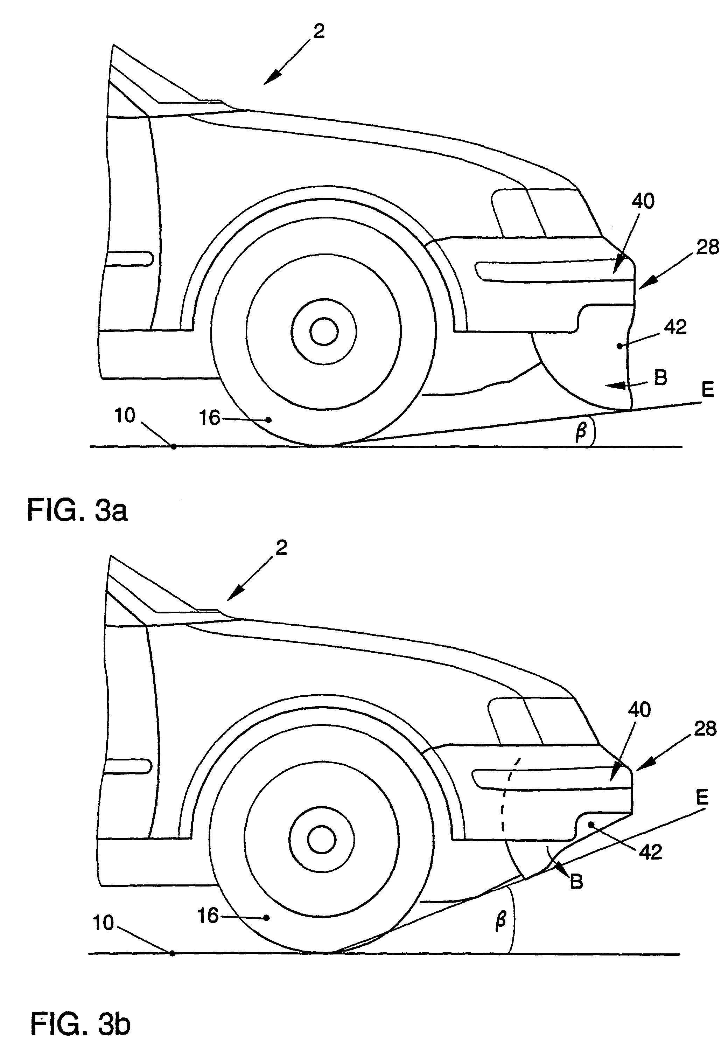

Während in der ausgefahrenen Endstellung (Fig. 2a) die Unterkante der im wesentlichen vertikalen vorderen Stirnfläche der vom Stoßfänger und vom Spoiler gebildeten Soft-nose einen Abstand zwischen 180 und 250 mm von der Fahrbahnoberfläche 10 aufweist, beträgt dieser Abstand in der eingefahrenen Endstellung (Fig. 2b) etwa 300 bis 350 mm, womit es möglich ist, bei Fahrten in unebenem Gelände die Bodenfreiheit im Bereich der Soft-nose 28 erheblich zu vergrößern. Die Betätigung des Elektromotors erfolgt hier beispielsweise automatisch, wenn die Summe der Neigungswinkel und/oder Schwingungsamplituden des Kraftfahrzeugs über einen vorbestimmten Zeitraum einen vorgegebenen Wert übersteigt.
Bei dem in den Figuren 3a und 3b dargestellten Pkw 2 ist ein unterhalb des Stoßfängers 40 angeordneter und mit dem Stoßfänger 40 zu einer Soft-nose 28 kombinierter Frontspoiler 42 in Richtung der Pfeile B verschwenkbar am unteren Rand des Stoßfängers 40 angelenkt, wobei seine vordere Stimfläche in der in Fig. 3a dargestellten ausgefahrenen Endstellung im wesentlichen mit der vertikalen Stimfläche des Stoßfängers 40 fluchtet und diese nach unten verlängert, während sie in der eingefahrenen Endstellung im wesentlichen schräg nach hinten und unten in Richtung der Auflagepunkte der Vorderräder 16 weist. Somit kann durch Einfahren des Spoilers 42 der Überhangwinkel β beträchtlich vergrößert werden, der zwischen der Fahrbahnoberfläche 10 und einer schrägen Ebene E gebildet wird, welche sich von den Auflagepunkten der Vorderräder 16 aus als Tangentialebene zum tiefsten Punkt der Unterseite der Soft-nose 28 erstreckt, bei dem dargestellten Pkw 2 jeweils die Unterkante der vorderen Stimfläche des verschwenkbaren Frontspoilers 42. Das Ein- und Ausfahren des Spoilers 42 erfolgt hier mit einem ähnlichen Antrieb wie demjenigen handelsüblicher motorisch verschwenkbarer Sonnendächer.

## Patentansprüche

1. Kraftfahrzeug mit einem Stoßfänger, insbesondere für einen Personenkraftwagen, wobei mindestens ein Teil (8) des Stoßfängers (4) und/oder mindestens ein Teil (36) eines unterhalb des Stoßfängers (30; 40) angeordneten Spoilers (32; 42) in Bezug zu einer Karosserie des Kraftfahrzeugs (2) beweglich ist und mit einer steuerbären Antriebsvorrichtung (20) verbunden ist, um eine Veränderung der Geometrie des Stoßfängers (4; 30; 40) und/oder Spoilers (32; 42) durch Verlagerung des beweglichen Stoßfänger- und/oder Spoilerteils (8; 32; 42) in Abhängigkeit von Fahrt- und/oder Pre-Crash-Bedingungen zu ermöglichen, **dadurch gekennzeichnet, daß** dem Kraftfahrzeug respektive der Antriebsvorrichtung (20) ein oder mehrere Neigungs- und/oder Schwingungssensoren zugeordnet sind und die Antriebsvorrichtung (20) manuell oder automatisch betätigt wird, wenn die Summe der Neigungswinkel und/oder der Schwingungsamplituden des Kraftfahrzeugs über einen vorbestimmten Zeitraum einen vorgegebenen Wert übersteigt bzw. unter den vorgegebenen Wert sinkt.

2. Kraftfahrzeug mit einem Stoßfänger nach Anspruch 1, **dadurch gekennzeichnet, daß** der Stoßfänger (4; 30; 40) und/oder Spoiler (32; 42) ein vorderer Stoßfänger (4; 30; 40) und/oder Spoiler (32; 42) ist.

3. Kraftfahrzeug mit einem Stoßfänger nach Anspruch 1 oder 2, **dadurch gekennzeichnet, daß** der Stoßfänger- und/oder Spoilerteil (8; 32; 42) zwischen einer ersten und einer zweiten Endstellung beweglich ist.

4. Kraftfahrzeug mit einem Stoßfänger nach einem der Ansprüche 1 bis 3, **dadurch gekennzeichnet, daß** bei der Verlagerung des beweglichen Stoßfänger- und/oder Spoilerteils (8; 32; 42) ein Abstand zwischen einer Fahrbahnebene (10) und einer Unterkante einer vorderen Stirnfläche des beweglichen Stoßfänger- und/oder Spoilerteils (8; 32; 42) verkleinert bzw. vergrößert wird.

5. Kraftfahrzeug mit einem Stoßfänger nach Anspruch 3 und 4, **dadurch gekennzeichnet, daß** der Abstand in der ersten Endstellung zwischen 180 und 300 mm beträgt, und in der zweiten Endstellung mehr als 300 mm.

6. Kraftfahrzeug mit einem Stoßfänger nach einem der Ansprüche 1 bis 5, **dadurch gekennzeichnet, daß** bei der Verlagerung des beweglichen Stoßfänger- und/oder Spoilerteils (8; 32; 42) ein Neigungswinkel einer vorderen Stimfläche des beweglichen Stoßfängerund/oder Spoilerteils (42) gegenüber der Fahrbahnebene (10) vergrößert bzw. verkleinert wird.

7. Kraftfahrzeug mit einem Stoßfänger nach Anspruch 6, **dadurch gekennzeichnet, daß** der Neigungswinkel in der ersten Endstellung zwischen 70 und 90 Grad liegt und in der zweiten Endstellung kleiner ist als 60 Grad.

8. Kraftfahrzeug mit einem Stoßfänger nach einem der Ansprüche 1 bis 7, **dadurch gekennzeichnet, daß** bei der Verlagerung des beweglichen Stoßfänger- und/oder Spoilerteils (8; 32; 42) ein Überhangwinkel (β) zwischen einer Fahrbahnebene (10) und einer Ebene (E), die sich von Radauflagepunkten benachbarter Vorderräder (16) des Kraftfahrzeugs als Tangentialebene zu den am tiefsten liegenden Punkten unter dem Stoßfänger (4; 30; 40) erstreckt, verkleinert bzw. vergrößert wird.

9. Kraftfahrzeug mit einem Stoßfänger nach Anspruch 8, **dadurch gekennzeichnet, daß** der Überhangwinkel in der ersten Endstellung kleiner ist als 20 Grad und in der zweiten Endstellung größer als 25 Grad.

10. Kraftfahrzeug mit einem Stoßfänger nach einem der Ansprüche 1 bis 9, **dadurch gekennzeichnet, daß** der Stoßfänger- und/oder Spoilerteil (8) im wesentlichen parallel zu einer Fahrbahnebene (10) beweglich ist.

11. Kraftfahrzeug mit einem Stoßfänger nach einem der Ansprüche 1 bis 10, **dadurch gekennzeichnet, daß** der Stoßfänger- und/oder Spoilerteil (36) im wesentlichen senkrecht zu einer Fahrbahnebene (10) beweglich ist.

12. Kraftfahrzeug mit einem Stoßfänger nach einem der Ansprüche 1 bis 11, **dadurch gekennzeichnet, daß** der Stoßfänger- und/oder Spoilerteil (42) um eine quer zur Fahrtrichtung verlaufende Achse verschwenkbar ist.

13. Kraftfahrzeug mit einem Stoßfänger nach einem der Ansprüche 1 bis 12, **dadurch gekennzeichnet, daß** der Spoiler (42) oder ein Teil (36) des Spoilers (32) in Bezug zum ortsfesten Stoßfänger (40; 30) beweglich ist.

14. Kraftfahrzeug mit einem Stoßfänger nach einem der Ansprüche 1 bis 13, **dadurch gekennzeichnet, daß** die Antriebsvorrichtung im Fall einer automatischen Betätigung manuell übersteuerbar ist.

15. Kraftfahrzeug mit einem Stoßfänger nach einem der Ansprüche 1 bis 14, **dadurch gekennzeichnet, daß** die Antriebsvorrichtung elektrisch, hydraulisch, pneumatisch oder pyrotechnisch arbeitet oder über eine Kupplung mit einem Antrieb des Kraftfahrzeugs verbindbar ist.

## Claims

1. Motor vehicle with a bumper, in particular for a passenger car, at least one part (8) of the bumper (4) and/or at least one part (36) of a spoiler (32; 42) arranged below the bumper (30; 40) being movable with respect to a body of the motor vehicle (2) and being connected to a controllable drive device (20), in order to allow a variation in the geometry of the bumper (4; 30; 40) and/or spoiler (32; 42) by a displacement of the movable bumper part and/or spoiler part (8; 32; 42) as a function of driving and/or pre-crash conditions, **characterized in that** the motor vehicle or the driver device (20) is assigned one or more inclination and/or oscillation sensors and the drive device (20) is actuated manually or automatically when the sum of the angles of inclination and/or of the amplitudes of oscillation of the motor vehicle exceeds a predetermined value or falls below the predetermined value over a predefined period of time.

2. Motor vehicle with a bumper according to Claim 1, **characterized in that** the bumper (4; 30; 40) and/or spoiler (32; 42) is a front bumper (4; 30; 40) and/or spoiler (32; 42).

3. Motor vehicle with a bumper according to Claim 1 or 2, **characterized in that** the bumper part and/or spoiler part (8; 32; 42) is movable between a first and a second end position.

4. Motor vehicle with a bumper according to one of Claims 1 to 3, **characterized in that**, during the displacement of the movable bumper part and/or spoiler part (8; 32; 42), a distance between a road level (10) and a lower edge of a front end face of the movable bumper part and/or spoiler part (8; 32; 42) is reduced or increased.

5. Motor vehicle with a bumper according to Claim 3 and 4, **characterized in that** the distance is between 180 and 300 mm in the first end position and is more than 300 mm in the second end position.

6. Motor vehicle with a bumper according to one of Claims 1 to 5, **characterized in that**, during the displacement of the movable bumper part and/or spoiler part (8; 32; 42), an angle of inclination of a front end face of the movable bumper part and/or spoiler part (42) is increased or reduced with respect to the road level (10).

7. Motor vehicle with a bumper according to Claim 6, **characterized in that** the angle of inclination is between 70 and 90 degrees in the first end position and is smaller than 60 degrees in the second end position.

8. Motor vehicle with a bumper according to one of Claims 1 to 7, **characterized in that**, during the displacement of the movable bumper part and/or spoiler part (8; 32; 42), an overhang angle (β) between a road level (10) and a plane (E) which extends from wheel contact points of adjacent front wheels (16) of the motor vehicle as a tangential plane to the lowest-lying points under the bumper (4; 30; 40) is reduced or increased.

9. Motor vehicle with a bumper according to Claim 8, **characterized in that** the overhang angle is smaller than 20 degrees in the first end position and larger than 25 degrees in the second end position.

10. Motor vehicle with a bumper according to one of Claims 1 to 9, **characterized in that** the bumper part and/or spoiler part (8) is movable essentially parallel to a road level (10).

11. Motor vehicle with a bumper according to one of Claims 1 to 10, **characterized in that** the bumper part and/or spoiler part (36) is movable essentially perpendicularly to a road level (10).

12. Motor vehicle with a bumper according to one of Claims 1 to 11, **characterized in that** the bumper part and/or spoiler part (42) is pivotable about an axis running transversely to the driving direction.

13. Motor vehicle with a bumper according to one of Claims 1 to 12, **characterized in that** the spoiler (42) or a part (36) of the spoiler (32) is movable with respect to the fixed bumper (40; 30).

14. Motor vehicle with a bumper according to one of Claims 1 to 13, **characterized in that**, in the case of automatic actuation, the drive device can be overridden manually.

15. Motor vehicle with a bumper according to one of Claims 1 to 14, **characterized in that** the drive device operates electrically, hydraulically, pneumatically or pyrotechnically or can be connected to a drive for the motor vehicle via a coupling.

## Revendications

1. Véhicule automobile avec un pare-chocs, en particulier pour un véhicule de tourisme, dans lequel au moins une partie (8) du pare-chocs (4) et/ou au moins une partie (36) d'un déflecteur (32 42) disposé sous le pare-chocs (30 ; 40) est déplaçable par rapport à une carrosserie du véhicule (2) et est connectée à un dispositif d'entraînement commandable (20), afin de permettre une modification de la géométrie du pare-chocs (4 30 ; 40) et/ou du déflecteur (32 ; 42) par décalage de la partie déplaçable du pare-chocs et/ou du déflecteur (8 ; 32 ; 42) en fonction de conditions de conduite et/ou de pré-collision, **caractérisé en ce que** un ou plusieurs capteurs d'inclinaison et/ou d'oscillation sont associés au véhicule automobile, respectivement au dispositif d'entraînement (20), et le dispositif d'entraînement (20) est actionné manuellement ou automatiquement, si la somme de l'angle d'inclinaison et/ou des amplitudes d'oscillation du véhicule automobile dépasse une valeur prédéfinie dans un intervalle de temps prédéterminé, ou tombe en dessous de la valeur prédéfinie.

2. Véhicule automobile avec un pare-chocs selon la revendication 1, **caractérisé en ce que** le pare-chocs (4 ; 30 ; 40) et/ou le déflecteur (32; 42) est un pare-chocs avant (4 ; 30 ; 40) et/ou un déflecteur avant (32 ; 42).

3. Véhicule automobile avec un pare-chocs selon la revendication 1 ou 2, **caractérisé en ce que** la partie de pare-chocs et/ou de déflecteur (8; 32; 42) est déplaçable entre une première et une deuxième position d'extrémité.

4. Véhicule automobile avec un pare-chocs selon l'une quelconque des revendications 1 à 3, **caractérisé en ce que** lors du décalage de la partie déplaçable de pare-chocs et/ou de déflecteur (8; 32; 42), une distance entre un plan de trajectoire de conduite (10) et une arête inférieure d'une face frontale avant de la partie déplaçable du pare-chocs et/ou du déflecteur (8 ; 32 ; 42) est réduite ou augmentée.

5. Véhicule automobile avec un pare-chocs selon les revendications 3 et 4, **caractérisé en ce que** la distance dans la première position d'extrémité est comprise entre 180 et 300 mm, et dans la deuxième position d'extrémité est supérieure à 300 mm.

6. Véhicule automobile avec un pare-chocs selon l'une quelconque des revendications 1 à 5, **caractérisé en ce que** lors du décalage de la partie déplaçable de pare-chocs et/ou de déflecteurs (8 ; 32 ; 42), un angle d'inclinaison d'une face frontale avant de la partie déplaçable de pare-chocs et/ou de déflecteur (42) est augmentée ou réduite par rapport au plan d de trajectoire de conduite (10).

7. Véhicule automobile avec un pare-chocs selon la revendication 6, **caractérisé en ce que** l'angle d'inclinaison est compris entre 70 et 90 degrés dans la première position d'extrémité et est inférieur à 60 degrés dans la deuxième position d'extrémité.

8. Véhicule automobile avec un pare-chocs selon l'une quelconque des revendications 1 à 7, **caractérisé en ce que** lors du décalage de la partie déplaçable de pare-chocs et/ou de déflecteur (8 ; 32 ; 42), un angle de surplomb (β) entre un plan de trajectoire de conduite (10) et un plan (E), qui s'étend depuis des points d'appui de roues avant (16) voisines du véhicule en tant que plan tangent aux points se trouvant les plus bas sous le pare-chocs (4; 30 ; 40), est réduit ou augmenté.

9. Véhicule automobile avec un pare-chocs selon la revendication 8, **caractérisé en ce que** l'angle de surplomb dans la première position d'extrémité est inférieur à 20 degrés et est supérieur à 25 degrés dans la deuxième position d'extrémité.

10. Véhicule automobile avec un pare-chocs selon l'une quelconque des revendications 1 à 9, **caractérisé en ce que** la partie de pare-chocs et/ou de déflecteur (8) est déplaçable essentiellement parallèlement à un plan de trajectoire de conduite (10) .

11. Véhicule automobile avec un pare-chocs selon l'une quelconque des revendications 1 à 10, **caractérisé en ce que** la partie de pare-chocs et/ou de déflecteur (36) est déplaçable essentiellement perpendiculairement à un plan de trajectoire de conduite (10).

12. Véhicule automobile avec un pare-chocs selon l'une quelconque des revendications 1 à 11, **caractérisé en ce que** la partie de pare-chocs et/ou de déflecteur (42) peut être pivotée autour d'un axe s'étendant transversalement à la direction de conduite.

13. Véhicule automobile avec un pare-chocs selon l'une quelconque des revendications 1 à 12, **caractérisé en ce que** le déflecteur (42) ou une partie (36) du déflecteur (32) est déplaçable par rapport au pare-chocs fixe (40 ; 30).

14. Véhicule automobile avec un pare-chocs selon l'une quelconque des revendications 1 à 13, **caractérisé en ce que** le dispositif d'entraînement, dans le cas d'un actionnement automatique, peut être neutralisé manuellement.

15. Véhicule automobile avec un pare-chocs selon l'une quelconque des revendications 1 à 14, **caractérisé en ce que** le dispositif d'entraînement fonctionne de manière électrique, hydraulique, pneumatique ou pyrotechnique ou peut être connecté, au moyen d'un accouplement, à un entraînement du véhicule.
